# EUROPÄISCHE PATENTANMELDUNG

(11) **EP 2 535 624 A1**
(43) Veröffentlichungstag der Anmeldung: **19.12.2012**
(21) Anmeldenummer: 12003796.5
(22) Anmeldetag: 14.05.2012
(51) Int. Cl.: F16K 17/06

(54) **Druckbegrenzungsventil**

(30) Priorität: 15.06.2011 CH 10102011
(71) Anmelder: Liebherr-Machines Bulle SA, 1630 Bulle (CH)
(72) Erfinder: Kurzen, Andreas, 3772 St. Stephan (CH); Progin, Pascal, 1628 Vuadens (CH); Lanevongsa, No, 3027 Bern (CH); Reisch, Thomas, 89281 Filzingen (DE); Meier, Simon, 87700 Memmingen (DE)
(74) Vertreter: Laufhütte, Dieter

(57) **Zusammenfassung**

Druckbegrenzungsventil mit einem Federelement (21), dessen Vorspannung den Öffnungsdruck des Druckbegrenzungsventils bestimmt und welches sich auf einem verschiebbaren Federkolben (22) abstützt, so dass die Vorspannung des Federelements (21) durch Verschieben des Federkolbens (22) einstellbar ist, wobei der Federkolben (22) durch Anlegen eines Steuerdruckes an einem Steueranschluss (33) bewegbar ist, welcher hydraulisch mit einer Kolbenkammer (23), deren Volumen von der Position des Federkolbens (22) abhängt, in Verbindung steht. Dabei ist zwischen dem Steueranschluss (33) und der Kolbenkammer (23) ein Drosselelement (32) angeordnet.

## Beschreibung

Die vorliegende Erfindung betrifft ein Druckbegrenzungsventil mit einem Federelement, dessen Vorspannung den Öffnungsdruck des Druckbegrenzungsventils bestimmt und welches sich auf einem verschiebbaren Federkolben abstützt, so dass die Vorspannung des Federelements durch Verschieben des Federkolbens einstellbar ist. Bei solchen Druckbegrenzungsventilen kann damit durch die Einstellung der Vorspannung des Federelementes der Öffnungsdruck des Druckbegrenzungsventils eingestellt werden.

Dabei sind bereits Druckbegrenzungsventile bekannt, bei welchen der Federkolben durch Anlegen eines Steuerdrucks an einem Steueranschluss bewegbar ist, welcher hydraulisch mit einer Kolbenkammer, deren Volumen von der Position des Federkolbens abhängt, in Verbindung steht. Durch Anlegen eines Drucks an dem Steueranschluss kann so der Federkolben in der Kolbenkammer bewegt und damit der Öffnungsdruck des Druckbegrenzungsventils hydraulisch angesteuert werden. Beispielsweise kann so der Bremsdruck in einem hydraulischen Antriebskreislauf eingestellt werden.

Bei bekannten Druckbegrenzungsventilen ist es allerdings äußerst schwierig, den Steuerdruck zeitlich zu steuern und plötzliche Änderungen des Öffnungsdrucks des Druckbegrenzungsventils zu verhindern. Zudem ist das System aufgrund des nur sehr kleinen Steuervolumens der Kolbenkammer anfällig für Schwingungen.

Aufgabe der vorliegenden Erfindung ist es daher, ein Druckbegrenzungsventil mit einer verbesserten Ansteuerbarkeit zur Verfügung zu stellen.

Erfindungsgemäß wird diese Aufgabe durch Druckbegrenzungsventile gemäß den Ansprüchen 1 und 3 gelöst.

Vorteilhafte Ausgestaltungen der vorliegenden Erfindung sind dabei Gegenstand der Unteransprüche.

Die vorliegende Erfindung umfasst dabei ein Druckbegrenzungsventil mit einem Federelement, dessen Vorspannung den Öffnungsdruck des Druckbegrenzungsventils bestimmt und welche sich auf einem verschiebbaren Federkolben abstützt, so dass die Vorspannung des Federelements durch Verschieben des Federkolbens einstellbar ist. Dabei ist der Federkolben durch Anlegen eines Steuerdruckes an einem Steueranschluss bewegbar, wobei der Steueranschluss hydraulisch mit einer Kolbenkammer, deren Volumen von der Position des Federkolbens abhängt, in Verbindung steht. Erfindungsgemäß ist dabei vorgesehen, dass zwischen dem Steueranschluss und der Kolbenkammer ein Drosselelement angeordnet ist. Das Drosselelement dämpft dabei die Bewegung des Federkolbens bei einer Änderung des Drucks am Steueranschluss, so dass sich ein durch das Drosselelement gedämpfter Anstieg bzw. Abfall des Öffnungsdrucks des Druckbegrenzungsventils ergibt. Hierdurch werden plötzliche Druckwechsel verhindert, was sowohl das Hydrauliksystem, als auch die durch das Hydrauliksystem bewegten Teile schont. Weiterhin erlaubt die vorliegende Erfindung eine einfache zeitliche Ansteuerung des Öffnungsdrucks und einen verbesserten Bedienkomfort.

Vorteilhafterweise generiert dabei das am Steueranschluss anstehende Drucksignal über das Drosselelement einen Füllvolumenstrom, welcher den Federkolben in einer bestimmten Zeit von einer ersten Endposition in eine zweite Endposition bringt. Hierdurch ergibt sich eine gewisse Dämpfungszeit, in welcher das Druckbegrenzungsventil von einem minimalen Öffnungsdruck zu einem maximalen Öffnungsdruck oder umgekehrt wechselt.

Neben der gedämpften Druckwechselcharakteristik und der besseren Ansteuerbarkeit werden durch das Drosselelement zudem Schwingungen im System unterdrückt.

Das erfindungsgemäße Drosselelement kann dabei in unterschiedlichen Formen ausgeführt sein:
In einer ersten Ausführungsform kann ein Drosselelement mit einem festen Drosselquerschnitt eingesetzt werden. Hierdurch ergibt sich eine fest vorgegebene Dämpfungskonstante des Druckbegrenzungsventils.
In einem zweiten Ausführungsbeispiel kann dagegen ein Drosselelement mit einem variabel einstellbaren Drosselquerschnitt eingesetzt werden. Hierdurch kann die Dämpfungscharakteristik des erfindungsgemäßen Druckbegrenzungsventils je nach Anwendung eingestellt werden.

Bei beiden Ausführungsformen kann zudem vorgesehen sein, dass für den Zulauf und den Ablauf zwischen Kolbenkammer und Steueranschluss ein unterschiedlicher Drosselquerschnitt eingesetzt wird. Hierdurch kann für den Druckanstieg eine andere Dämpfungskonstante vorgesehen werden als für den Druckabfall. Beispielsweise können dabei zwei parallel zueinander angeordnete Drosselelemente eingesetzt werden, welche jeweils mit in unterschiedlicher Richtung wirkenden Rückschlagventilen in Serie geschaltet werden.

Das Druckbegrenzungsventil gemäß dem bisher beschriebenen ersten Aspekt der vorliegenden Erfindung ermöglicht damit eine hydraulische Ansteuerung des Öffnungsdruckes, wobei durch das Drosselelement automatisch eine Dämpfung des Druckwechsels stattfindet. Damit wird zudem eine einfache zeitliche Ansteuerung des Öffnungsdrucks über die Zeitdauer, in welcher das Drucksignal am Steueranschluss anliegt und einen Volumenstrom generiert und damit den Öffnungsdruck ändert, möglich. Insbesondere kann die zeitliche Ansteuerung des Öffnungsdrucks dabei auch über das Umschalten zwischen lediglich zwei Druckniveaus am Steuereingang erreicht werden.

In einem zweiten Aspekt umfasst die vorliegende Erfindung ein Druckbegrenzungsventil mit einem Federelement, dessen Vorspannung den Öffnungsdruck des Druckbegrenzungsventils bestimmt und welches sich auf einem verschiebbaren Federkolben abstützt, so dass die Vorspannung des Federelements durch Verschieben des Federkolbens einstellbar ist. Erfindungsgemäß ist dabei vorgesehen, dass der Federkolben über einen elektrischen Aktor bewegbar ist, welcher über einen elektrischen Steueranschluss ansteuerbar ist. Eine solche elektrische Ansteuerung ergibt nochmals eine Vielzahl von Freiheitsgraden, welche durch Parametrierung individuell an die jeweiligen Einsatzbedingungen angepaßt werden können. Beispielsweise kann dabei ein Linearmotor und/oder ein Schrittmotor eingesetzt werden, welcher den Federkolben verschiebt und damit die Vorspannung des Federelements einstellt. Vorteilhafterweise ist weiterhin eine elektronische Steuerung vorgesehen. Insbesondere kann diese eine gedämpfte Ansteuerung des Druckbegrenzungsventils vornehmen.

Vorteilhafterweise ist bei den Druckbegrenzungsventilen gemäß der vorliegenden Erfindung mindestens eine Endposition des Federkolbens einstellbar. Durch die Einstellbarkeit der Endposition kann damit die maximale bzw. minimale Vorspannung des Federelements und damit der maximale bzw. minimale Öffnungsdruck des Druckbegrenzungsventils vorgegeben werden. Vorteilhafterweise entspricht demgemäß die Endposition dem maximalen oder dem minimalen durch Ansteuerung des Federkolbens einstellbaren Öffnungsdruck.

Insbesondere kann dabei eine Grundposition, welche der Federkolben einnimmt, wenn kein Druck an der Kolbenkammer anliegt, einstellbar sein. Alternativ oder zusätzlich kann auch eine Endposition des Federkolbens einstellbar sein, welche einer maximalen Vorspannung des Federelements entspricht.

Beispielsweise kann dabei eine Verstellbuchse vorgesehen sein, welche einen Anschlag für die Rückseite des Federkolbens bildet und damit dessen Grundposition definiert.

Weiterhin kann eine Stellschraube vorgesehen sein, welche mit Anschlägen am Federkolben zusammenwirkt und damit dessen Endposition festlegt.

In einer bevorzugten Ausführungsform ist dabei die Verstellbuchse in den Ventilkörper einschraubbar. Weiterhin kann vorgesehen sein, dass die Verstellschraube in die Verstellbuchse einschraubbar ist.

In einer besonders bevorzugten Ausführungsform kann der Steueranschluss dabei an der Verstellschraube angeordnet sein, so dass ein Kanal durch die Verstellschraube den Steueranschluss mit der Kolbenkammer verbindet. Vorteilhafterweise ist dabei in diesem Kanal das Drosselelement angeordnet.

Weiterhin kann die Verstellschraube Anschlagsbereiche aufweisen, welche mit Gegenanschlagsbereichen des Federkolbens zusammenwirken, welche in die Kolbenkammer hineinreichen. Die Stellschraube kann dabei einen Hinterschnitt aufweisen, welcher mit einem Hinterschnitt an der Rückseite des Federkolbens zusammenwirkt.

Bei dem erfindungsgemäßen Druckbegrenzungsventil kann es sich um ein nicht vorgesteuertes Ventil handeln. In diesem Fall stützt sich das Federelement vorteilhafterweise mit seiner dem Federkolben gegenüberliegenden Seite auf dem Hauptkolben des Druckbegrenzungsventils ab.

Der Hauptkolben ist vorteilhafterweise in einer Hauptkolbenkammer verschieblich angeordnet und kann bei einer Bewegung gegen die Kraft des Federelementes die Verbindung zwischen einem Hauptzulauf und einem Hauptablauf freigeben. Vorteilhafterweise wird dabei die dem Federelement gegenüberliegende Fläche des Hauptkolbens mit Druck auf dem Hauptzulauf beaufschlagt. Übersteigt daher die durch den Druck am Hauptzulauf auf den Hauptkolben ausgeübte Kraft die Federkraft des Federelementes, bewegt sich der Hauptkolben gegen die Kraft des Federelementes und gibt die Verbindung zwischen Hauptzulauf und Hauptablauf frei. Die Federkraft des Federelementes definiert damit direkt den Öffnungsdruck des erfindungsgemäßen Druckbegrenzungsventils.

In einer bevorzugten Ausführungsform handelt es sich bei dem erfindungsgemäßen Druckbegrenzungsventil dagegen um ein vorgesteuertes Ventil. Vorteilhafterweise steuert das Federelement dabei einen Steuerfluidstrom, welcher seinerseits die Bewegung eines Hauptkolbens bestimmt.

Insbesondere kann das erfindungsgemäße Druckbegrenzungsventil dabei einen federbelasteten Hauptkolben umfassen, dessen Öffnungsbewegung durch Abfließen von Steuerfluid aus einer Hauptkolbenkammer freigegeben wird. Vorteilhafterweise drückt das Federelement dabei einen Kegel gegen einen Kegelsitz, durch welchen hindurch der Steuerfluidstrom zum Öffnen der Hauptstufe abfließt. Wird daher die Kraft, welche der Druck in der Hauptkolbenkammer auf den Kegel ausübt, größer als die Federkraft des Federelementes, öffnet der Kegelsitz und ein Steuerfluidstrom entsteht. Vorteilhafterweise steht dabei die Hauptkolbenkammer über ein Drosselelement mit dem Kolbensitz in Verbindung. Hierdurch wird ein zu schneller Druckwechsel beim Öffnen des Druckbegrenzungsventils verhindert.

Das erfindungsgemäße Druckbegrenzungsventil kann weiterhin einen Hauptzulauf und einem Hauptablauf aufweisen, wobei der Hauptkolben auf der der Hauptkolbenkammer gegenüber liegenden Seite mit Druck aus dem Hauptzulauf beaufschlagt ist und durch eine Bewegung in die Kolbenkammer hinein die Verbindung zwischen Hauptzulauf und Hauptablauf freigibt. Fließt daher Steuerfluid aus der Hauptkolbenkammer ab, wird der Hauptkolben durch den Druck aus dem Hauptzulauf in die Kolbenkammer hinein bewegt und gibt damit das Druckbegrenzungsventil frei.

Vorteilhafterweise ist dabei vorgesehen, dass die Hauptkolbenkammer mit dem Hauptzulauf in Verbindung steht, so dass auch in der Hauptkolbenkammer der Druck am Hauptzulauf ansteht. Vorteilhafterweise erfolgt die Verbindung dabei über ein Drosselelement. Auch hierdurch wird ein zu plötzliches Öffnen des Druckbegrenzungsventils verhindert. Weiterhin vorteilhafterweise ist die Drosselwirkung des Drosselelements zwischen Hauptzulauf und Hauptkolbenkammer dabei größer als die Drosselwirkung des Drosselelements zwischen Hauptkolbenkammer und Kegelsitz. Weiterhin vorteilhafterweise kann das Drosselelement im Hauptkolben angeordnet sein.

Weiterhin kann die Feder, welche den Hauptkolben gegen den Druck aus dem Hauptzulauf abstützt, sich dabei ihrerseits auf der Rückseite des Kegelsitzes für die Vorstufe abstützen.

Weiterhin vorteilhafterweise kann vorgesehen sein, dass das durch den Kegelsitz abfließende Steuerfluid über einen Steuerablauf des erfindungsgemäßen Druckbegrenzungsventils abläuft. Der Steuerablauf kann dabei mit dem Hauptablauf des Druckbegrenzungsventils in Verbindung stehen.

Neben dem Druckbegrenzungsventil umfasst die vorliegende Erfindung weiterhin ein Hydrauliksystem, mit wenigstens einem erfindungsgemäßen Druckbegrenzungsventil, wie es oben beschrieben wurde. Vorteilhafterweise ist dabei vorgesehen, dass durch das Druckbegrenzungsventil ein maximaler Hydraulikdruck in einer Hydraulikleitung an einer Eingangs- oder einer Ausgangsseite eines Hydraulikmotors über ein Steuerelement einstellbar ist. Vorteilhafterweise ist das Steuerelement dabei über eine hydraulische oder elektrische Steuerleitung mit dem Steueranschluss des Druckbegrenzungsventils verbunden, je nach dem, ob die Ansteuerung wie oben beschrieben hydraulisch über ein Drosselelement oder elektrisch erfolgt.

Vorteilhafterweise handelt es sich bei dem Hydrauliksystem dabei um einen offenen Hydraulikkreislauf. Insbesondere kann der Hydraulikmotor dabei über eine erste Hydraulikleitung mit Hochdruck beaufschlagt werden, während das Hydraulikfluid über eine zweite Hydraulikleitung zum Tank hin abfließt. Vorteilhafterweise verbindet das Druckbegrenzungsventil dabei die beiden Hydraulikleitungen. Weiterhin kann vorgesehen sein, dass zwei Druckbegrenzungsventile mit entgegengesetzter Ausrichtung zwischen den beiden Hydraulikleitungen angeordnet sind. Dabei kann zudem vorgesehen sein, dass die Verbindung der beiden Hydraulikleitungen mit Hochdruck und Rücklaufdruck umgekehrt wird, um die Drehrichtung zu wechseln. Die Ansteuerung des Systems kann dabei über eine Ventilanordnung erfolgen.

Durch die Druckbegrenzungsventile kann dabei der maximale Systemdruck im Hydraulikkreislauf eingestellt werden. Hierdurch kann sowohl die Beschleunigung des Motors, als auch das durch den Motor ausgeübte Bremsmoment eingestellt werden.

Alternativ kann es sich bei dem erfindungsgemäßen Hydrauliksystem auch um einen geschlossenen Hydraulikkreislauf handeln. Insbesondere kann der Hydraulikkreislauf dabei eine Hydraulikpumpe und einen Hydraulikmotor umfassen, wobei die Hydraulikpumpe den Hydraulikmotor im geschlossenen Kreislauf antreibt. Das Druckbegrenzungsventil kann dabei eine Eingangs- oder Ausgangsseite des Hydraulikmotors miteinander oder mit dem Tank verbinden. In einer besonders bevorzugten Ausführungsform sind dabei zwei Druckbegrenzungsventile vorgesehen, durch welche ein maximaler Hydraulikdruck in den Hydraulikleitungen an der Eingangs- und der Ausgangsseite des Hydraulikmotors einstellbar ist.

Vorteilhafterweise kann das Steuerelement zur Ansteuerung der Beschleunigung des Hydraulikmotors dienen, wobei das Steuerelement in einem Beschleunigungsbereich das Druckbegrenzungsventil auf einen ersten Öffnungsdruck einstellt. Vorteilhafterweise handelt es sich dabei um einen relativ hohen Öffnungsdruck, so dass zum Beschleunigen des Hydraulikmotors ein hoher Systemdruck zur Verfügung steht. Insbesondere kann der erste Öffnungsdruck dabei in einem Bereich zwischen 250 und 500 bar liegen, vorteilhafterweise in einem Bereich zwischen 250 und 300 bar.

Alternativ oder zusätzlich kann das Steuerelement zur Ansteuerung des Bremsmomentes des Hydraulikmotors dienen. Insbesondere kann dabei der Druck, auf welchen sich der Hydraulikmotor beim Bremsen abstützt, eingestellt werden.

Insbesondere kann das Steuerelement dabei in einer Neutralstellung das Druckbegrenzungsventil auf einen zweiten Öffnungsdruck einstellen. Vorteilhafterweise ist der zweite Öffnungsdruck dabei niedriger als der erste Öffnungsdruck, so dass der Hydraulikmotor in der Neutralstellung des Steuerelementes nur ein geringes Bremsmoment erzeugt. Insbesondere kann der zweite Öffnungsdruck dabei in einem Bereich zwischen 50 und 200 bar liegen, insbesondere in einem Bereich zwischen 70 und 120 bar.

Alternativ oder zusätzlich kann vorgesehen sein, dass das Steuerelement in einem Bremsbereich den Öffnungsdruck des Druckbegrenzungsventils erhöht. Hierdurch kann der zum Bremsen zur Verfügung stehende Systemdruck und damit das Bremsmoment des Hydraulikmotors im Bremsbereich des Steuerelementes erhöht werden. In einer vorteilhaften Ausführungsform erhöht das Steuerelement dabei im Bremsbereich den Öffnungsdruck auf den gleichen Öffnungsdruck, welcher auch im Beschleunigungsbereich eingestellt wird.

In einer bevorzugten Ausführungsform werden der erste und der zweite Öffnungsdruck dabei durch die beiden Endstellungen des Federkolbens des Druckbegrenzungsventils definiert. Wie bereits oben beschrieben, sind diese vorteilhafterweise einstellbar.

Die hydraulische Ansteuerung des hydraulisch ausgeführten Druckbegrenzungsventils durch das Steuerelement kann damit einfach dadurch erfolgen, dass der Steueranschluss im Beschleunigungsbereich und/oder im Bremsbereich mit Steuerdruck beaufschlagt wird, so dass das Federelement (mit einer gewissen Dämpfung durch das Drosselelement) maximal vorgespannt wird und damit der maximale Öffnungsdruck eingestellt wird. In der Neutralstellung des Steuerelements wird der Steueranschluss dagegen vorteilhafterweise drucklos geschaltet bzw. mit Rücklaufdruck beaufschlagt, so dass der Federkolben durch das Federelement gegen seinen anderen Endanschlag bewegt wird und das Federelement damit nur noch mit der durch diesen Endanschlag definierten minimalen Federkraft vorgespannt ist.

In einer besonders bevorzugten Ausführungsform steuert das Steuerelement dabei gleichzeitig ein Beschleunigungssteuerelement und das Druckbegrenzungsventil an.

Erfolgt die Ansteuerung des Hydrauliksystems dabei beispielsweise durch die Verstellung einer Verstellpumpe und/oder eines Verstellmotors, so kann das Steuerelement sowohl zur Ansteuerung des Verstellmotors und/oder der Verstellpumpe sowie des Druckbegrenzungsventils eingesetzt werden. Erfolgt die Ansteuerung des Hydrauliksystems alternativ oder zusätzlich über eine Ventilanordnung, kann vorteilhafterweise das Steuerelement sowohl zur Ansteuerung der Ventilanordnung sowie des Druckbegrenzungsventils eingesetzt werden.

Vorteilhafterweise beschleunigt dabei eine Bewegung des Steuerelements in eine erste Richtung den Hydraulikmotor und stellt das Druckbegrenzungsventil auf einen ersten Öffnungsdruck ein. Weiterhin vorteilhafterweise stoppt das Steuerelement in Neutralstellung den Fluidstrom zum Hydraulikmotor und stellt das Druckbegrenzungsventil auf einen zweiten, niedrigeren Öffnungsdruck ein. Weiterhin vorteilhafterweise erhöht eine Bewegung des Steuerelements in eine der ersten Richtung entgegengesetzte zweite Richtung den Öffnungsdruck des Druckbegrenzungsventils wieder, während der Fluidstrom zum Hydraulikmotor gestoppt bleibt.

Beim Beschleunigen steht dem Bediener dabei ein großes Beschleunigungsmoment zur Verfügung, da das Druckbegrenzungsventil das Hydrauliksystem auf einem hohen Systemdruck hält. In Neutralstellung öffnet das Druckbegrenzungsventil dagegen bereits bei einem niedrigeren Systemdruck, so dass das Bremsmoment des Hydraulikmotors relativ gering ausfällt. Die durch den Hydraulikmotor angetriebene Vorrichtung stoppt damit bei einer Neutralstellung des Steuerelements nicht plötzlich, sondern läuft weich aus.

Wird das Steuerelement dagegen in den Bremsbereich bewegt, steigt der Öffnungsdruck des Druckbegrenzungsventils an und stellt damit wieder ein hohes Bremsmoment zur Verfügung, so dass die Vorrichtung schnell gestoppt werden kann.

Bei dem Steuerelement kann es sich dabei beispielsweise um einen Joystick handeln, mit welchem ein Bediener das Hydrauliksystem bedient.

Durch das erfindungsgemäße Druckbegrenzungsventil erfolgt der Wechsel zwischen den Druckniveaus dabei gedämpft, so dass die Belastungen sowohl für das Hydrauliksystem, als auch für die durch den Hydraulikmotor angetriebene Vorrichtung minimiert werden. Zudem ist durch die Dämpfung des Druckanstiegs ein äußerst feinfühliges Bremsen möglich. Durch die Dämpfung des Druckanstiegs bei einer Bewegung des Steuerelements aus der Neutralstellung in den Beschleunigungsbereich ist zudem ein weiches Anfahren des Hydraulikmotors möglich.

Wie bereits oben beschrieben, wird die Dämpfung dabei erfindungsgemäß in der hydraulischen Variante dadurch bewirkt, dass zwischen Steueranschluss und Kolbenkammer ein Drosselelement angeordnet ist. In der elektrischen Variante erfolgt die Dämpfung dagegen durch die Vorgabe von Dämpfungsfunktionen bei der Ansteuerung des Elektromotors.

Besonders bevorzugt kann das erfindungsgemäße Hydrauliksystem zum Antrieb eines Drehwerks oder eines Fahrwerks eingesetzt werden. Durch die erfindungsgemäße Dämpfung des Steueranschlusses werden dabei die Belastungen beim Bremsen und Beschleunigen gering gehalten. Zudem ist das Hydrauliksystem auch für weniger erfahrene Bedienpersonen leicht zu bedienen. Weiterhin erhöht sich der Bedienkomfort, da sehr feinfühlig gebremst und/oder beschleunigt werden kann. Die vorliegende Erfindung umfasst weiterhin ein Arbeitsgerät mit einem Hydrauliksystem, wie es oben beschrieben wurde.

Weiterhin umfasst die vorliegende Erfindung ein verfahrbares Arbeitsgerät mit einem Hydrauliksystem, wie es oben beschrieben wurde. Insbesondere dient das Hydrauliksystem dabei zum Antrieb eines Fahrwerks zum Verfahren des Arbeitsgerätes. Alternativ oder zusätzlich kann ein erfindungsgemäßes Hydrauliksystem zum Antrieb eines Drehwerks, durch welches ein Oberwagen gegenüber einem Unterwagen des Arbeitsgerätes drehbar ist, eingesetzt werden. Weiterhin kann das erfindungsgemäße Hydrauliksystem auch zum Antrieb einer Winde eingesetzt werden.

Insbesondere kann das erfindungsgemäße verfahrbare Arbeitsgerät dabei einen Unterwagen mit einem Fahrwerk aufweisen, auf welchem ein Oberwagen um eine vertikale Drehachse drehbar angeordnet ist. Die Drehung des Oberwagens erfolgt dabei über das Drehwerk.

Weiterhin erfindungsgemäß kann das Arbeitsgerät einen Ausleger mit einer Arbeitsausrüstung aufweisen, beispielsweise mit einer Baggerschaufel. Weiterhin kann es sich bei dem Ausleger auch um einen Kranausleger handeln.

Die vorliegende Erfindung umfasst weiterhin ein Verfahren zum Betrieb eines Hydrauliksystems, wie es oben beschrieben wurde. Insbesondere kann dabei das Bremsmoment des Hydraulikmotors durch Ansteuerung des Druckbegrenzungsventils verändert werden. Vorteilhafterweise erfolgt die Ansteuerung des Hydrauliksystems dabei so, wie dies bereits oben dargestellt wurde. Insbesondere kann dabei der zeitliche Verlauf des Öffnungsdrucks des Druckbegrenzungsventils durch Umschalten zwischen nur zwei Druckniveaus am Steuerdruckanschluss erfolgen, da der zeitliche Verlauf des Öffnungsdrucks über die Zeitdauer der Drucksignale mit hohem bzw. niedrigem Steuerdruck angesteuert werden kann.

Die vorliegende Erfindung wird nun anhand eines Ausführungsbeispiels sowie Zeichnungen näher dargestellt. Dabei zeigen:
- Figur 1:: ein Ausführungsbeispiel eines erfindungsgemäßen Druckbegrenzungsventils und
- Figur 2:: ein Ausführungsbeispiel eines erfindungsgemäßen Hydrauliksystems, in welchem zwei erfindungsgemäße Druckbegrenzungsventile zum Einsatz kommen.

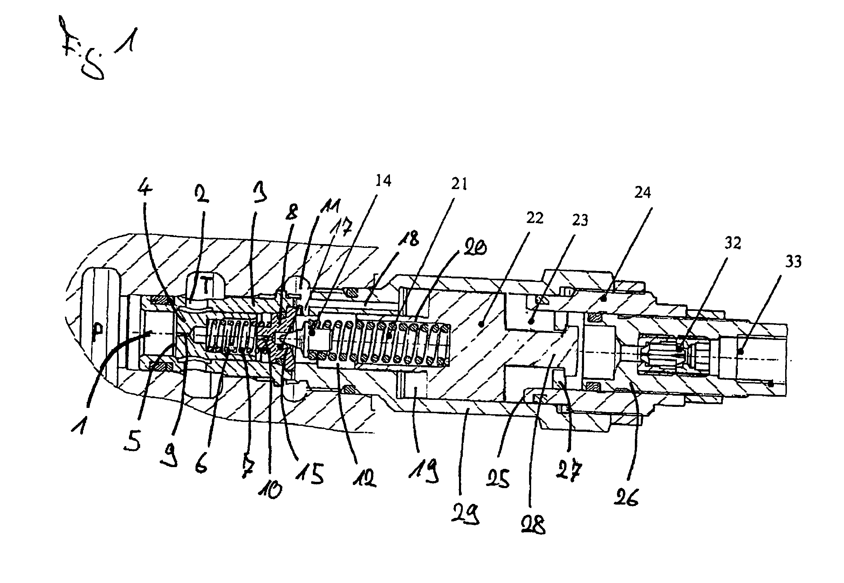

Figur 1 zeigt ein Ausführungsbeispiel eines Druckbegrenzungsventils gemäß der vorliegenden Erfindung mit einer hydraulischen Ansteuermöglichkeit für den Öffnungsdruck des Ventils.

Das Ventil weist dabei einen Hauptkolben 4 auf, welcher in einer Schließstellung die Verbindung zwischen dem Hauptzulauf 1 und dem Hauptablauf 2 sperrt und in einer geöffneten Stellung die Verbindung zwischen dem Hauptzulauf 1 und dem Hauptablauf 2 freigibt. Der Kolben 4 wird dabei auf seiner Stirnseite 5 von dem Druck im Hauptzulauf 1 beaufschlagt. Übersteigt der Druck im Hauptzulauf 1 den Öffnungsdruck des Ventils, drückt der Druck im Hauptzulauf 1 dabei den Hauptkolben 4 in die Hauptkolbenkammer 6. Hierdurch gibt der Hauptkolben 4 die Verbindung zwischen dem stirnseitig angeordneten Hauptzulauf 1 und dem seitlich angeordneten Hauptablauf 2 frei. Der Hauptkolben 4 ist dabei in einem Ventilgehäuse 3, in welchem der Hauptzulauf 1 und der Hauptablauf 2 als Öffnungen vorgesehen sind, axial verschieblich gelagert.

Bei dem in Fig. 1 gezeigten Ventil handelt es sich um ein zweistufiges Ventil. Das Ventil weist dabei einen Hauptkolben 4 auf, welcher in einer Hauptkolbenkammer 6 axial verschieblich angeordnet ist und auf seiner Stirnseite 5 mit Druck aus dem Hauptzulauf 1 beaufschlagt ist. Bei einer Bewegung in die Hauptkolbenkammer 6 gibt der Hauptkolben dabei die Verbindung zwischen Hauptzulauf und Hauptablauf frei.

Der Kolben ist dabei rückseitig über eine in der Hauptkolbenkammer 6 angeordnete Feder 7 axial vorgespannt. Weiter steht die Hauptkolbenkammer 6 mit dem Hauptzulauf 1 in Verbindung, im Ausführungsbeispiel durch das durch den Hauptkolben axial hindurchführende Drosselelement 9. Weiterhin vorteilhafterweise ist die Stirnfläche 5 des Hauptkolbens 4 etwas kleiner als seine Rückseite. Weiterhin kann die Feder 7, welche den Hauptkolben 4 gegen den Druck aus dem Hauptzulauf 1 abstützt, sich dabei ihrerseits auf der Rückseite des Kegelsitzelements 8 abstützen.

Der Hauptkolben gibt daher nur dann die Verbindung zwischen Hauptzulauf 1 und Hauptablauf 2 frei, wenn Hydraulikfluid über die Vorstufe aus der Hauptkolbenkammer 6 abfließt.

Dabei drückt das Federelement 21 einen Kegel 14 gegen einen Kegelsitz 15, durch welchen hindurch der Steuerfluidstrom zum Öffnen der Hauptstufe abfließt. Der Kegelsitz steht dabei rückseitig mit der Hauptkolbenkammer in Verbindung, im Ausführungsbeispiel über das Drosselelement 10, welches durch das Kegelsitzelement 8 axial hindurch führt.

Wird daher die Kraft, welche der Druck in der Hauptkolbenkammer 6 auf den Kegel 14 ausübt, größer als die Federkraft des Federelementes 21, öffnet der Kegelsitz 15 und ein Steuerfluidstrom entsteht. Das Steuerfluid kann dabei über die Öffnung 17 in den Steuerablauf 11 abfließen.

Fließt nun Steuerfluid aus der Hauptkolbenkammer 6 ab, wird der Hauptkolben durch den Druck aus dem Hauptzulauf 1 in die Kolbenkammer 6 hinein bewegt und gibt damit das Druckbegrenzungsventil frei.

Der Ventilöffnungsdruck wird damit erfindungsgemäß durch die Vorspannung des Federelementes 21 definiert. Das Federelement 21 ist dabei im Ausführungsbeispiel als Spiralfeder ausgeführt. Das Federelement 21 stützt sich auf einem Federkolben 22 ab, welcher zur Einstellung der Vorspannung des Federelements 21 verschiebbar ist. Der Federkolben 22 ist hierfür im Ausführungsbeispiel in einem Ventilgehäuse 29 axial verschiebbar.

Bei der im Ausführungsbeispiel gezeigten hydraulischen Ansteuerung befindet sich auf der dem Federelement 21 abgewandten Seite des Federkolbens 22 eine Kolbenkammer 23, durch deren Füllung mit Hydrauliköl der Federkolben 22 gegen das Federelement 21 bewegt wird. Umgekehrt kann bei einem Abfließen von Hydraulikfluid aus der Kolbenkammer 23 der Federkolben 22 durch die Feder 21 zurückbewegt werden.

Das Druckbegrenzungsventil weist dabei einen Steueranschluss 33 auf, an welchem ein Drucksteuersignal angelegt werden kann. Der Steuranschluss 33 steht dabei mit der Kolbenkammer 23 fluidisch in Verbindung. Wird daher an dem Steueranschluss 33 ein Druck angelegt, der auf den Federkolben 22 eine Kraft ausübt, die größer ist als die Federkraft des Federelements 21, wird der Federkolben 22 gegen das Federelement 21 bewegt und erhöht damit dessen Vorspannung. Liegt dagegen am Steueranschluss 33 ein Druck an, welcher am Federkolben 22 eine Kraft erzeugt, die geringer ist als die Federkraft des Federelements 21, so wird der Federkolben 22 durch das Federelement 21 zurückbewegt, wodurch die Vorspannung des Federelements 21 sinkt.

Die Endpositionen des Federkolbens 22 und damit die maximale und minimale Vorspannung des Federelements 21, welche durch das Druckbegrenzungsventil eingestellt werden können, werden durch Anschläge 25 und 27 definiert. Der Anschlag 25 definiert eine Grundstellung des Federkolbens 22, in welche dieser durch das Federelement 21 gedrückt wird, wenn kein Druck am Steueranschluss 33 anliegt. Der Anschlag 27 definiert dagegen eine Endposition, welche die maximale Vorspannung des Federelementes 21 definiert.

Im Ausführungsbeispiel sind dabei die beiden Endpositionen des Federkolbens 22 einstellbar. Hierfür ist der Anschlag 25 an einer Einstellbuchse 24 angeordnet, welche in das Ventilgehäuse 29 einschraubbar ist. Dabei stößt eine rückwärtige Kante des Federkolbens 22 gegen das den Anschlag 25 bildende Ende der Einstellbuchse 24. Durch Einschrauben und Herausschrauben der Einstellbuchse kann so die Grundposition des Kolbens verändert werden.

Das Gegenanschlagselement für den Anschlag 27 zur Einstellung der maximalen Vorspannung und damit des maximalen Öffnungsdruckes ist an einem rückwärtigen Vorsprung 28 des Federkolbens 22 angeordnet, wobei die Gegenanschlagsfläche in Richtung auf das Federelement 21 zeigt. Der Anschlag 27 ist dabei an einer Einstellschraube 26 angeordnet, ragt in die Kolbenkammer 23 und bildet einen Hinterschnitt zu den Gegenanschlagsbereichen des Vorsprungs 28 des Federkolbens 22.

Der Anschlag 27 ist dabei an einer Einstellschraube 26 angeordnet. Die Einstellschraube 26 ist weiter in die Einstellbuchse 24 einschraubbar.

Weiterhin ist an der Einstellschraube 26 auch der Steueranschluss 33 angeordnet. Vorteilhafterweise wird der Steueranschluss 33 dabei durch eine Axialbohrung der Einstellschraube 26 gebildet. Der Steueranschluss 33 steht dabei durch einen Kanal, welcher durch die Einstellschraube 26 hindurchführt, mit der Kolbenkammer 23 in Verbindung.

Erfindungsgemäß ist nun vorgesehen, dass die Verbindung zwischen dem Steueranschluss 33 und der Kolbenkammer 23 durch ein Drosselelement 32 erfolgt. Das Drosselelement 32 kann dabei in folgenden Formen ausgeführt sein:
- als Drosselelement mit einem fixen Drosselquerschnitt,
- als Drosselelement mit unterschiedlichen Drosselquerschnitten für den Zu- und den Ablauf (Shuttle),
- als Drosselelement mit variabel einstellbarem Drosselquerschnitt.

Das am Steueranschluss 33 anstehende Drucksignal generiert nun über das Drosselelement 32 einen Füllvolumenstrom, welcher den Federkolben 22 in einer bestimmten Zeit (Dämpfungszeit tD) von seiner Grundposition in eine Endposition bringt. Dabei sind durch Auslegung des Drosselelements bzw. durch Einstellung des Drosselquerschnitts unterschiedliche Druckverläufe über die Zeit realisierbar.

Zusammenfassend erfolgt die Einstellung des Öffnungsdruckes damit wie folgt: Der Öffnungsdruck wird durch die Federkraft des Federelements 21 definiert. Das Federelement 21 liegt dabei am Federkolben 22 an. Wird dieser in Richtung der Ventilachse verschoben, kann die Federkraft des Federelements 21 und somit das Druckniveau zur Öffnung des Ventils variiert werden. Der Federkolben 22 wird dabei durch Zuführen einer bestimmten Ölmenge in die Kolbenkammer 22 verschoben. Erfindungsgemäß erfolgt dabei die Füllung dieser Kolbenkammer 23 über einen externen Steuerdruckanschluss 33 und über das Drosselelement 32. Die Verwendung des Drosselelementes 32 sorgt so für einen sanft gedämpften Anstieg des Öffnungsdrucks bei Anlegen eines Steuerdrucks am Steueranschluss 33.

Die vorliegende Erfindung erlaubt damit eine feinfühlige Ansteuerung des Öffnungsdruckes, ohne dass hierfür das am Steueranschluss 33 anliegende Steuerdrucksignal feinfühlig angesteuert werden müsste. Vielmehr kann der Öffnungsdruck des Druckventils sanft von einem minimalen Öffnungsdruck zu einem Maximalöffnungsdruck gesteuert werden, indem der Steuerdruck für entsprechend lange Zeiträume von einem niedrigen Steuerdruckniveau auf ein hohes Steuerdruckniveau geschaltet wird und umgekehrt. Erfindungsgemäß wird weiterhin die Schwingungsanfälligkeit der Ansteuerung minimiert.

Alternativ kann die Ansteuerung des erfindungsgemäßen Ventils elektrisch erfolgen. Die Hubbewegung des Federkolbens 22 bzw. einer in gleicher Art arbeitenden Federmitnahme kann dabei durch einen elektrischen Aktor generiert werden, welcher über eine elektrische Steuerung angesteuert wird. Hier kann vorzugsweise ein Linearmotor, insbesondere ein Schrittmotor verwendet werden, welcher die Vorspannung des Federelements 21 einstellt. Diese Art der Ansteuerung gibt nochmals eine Vielzahl von Freiheitsgraden und kann durch Parametrierung individuell an die jeweiligen Einsatzbedingungen angepaßt werden.

Aber auch bei hydraulischer Ansteuerung ist durch die Einstellbarkeit der Grundposition und der Endposition des Federkolbens 22 und der möglichen Variabilität des Drosselelementes 32 eine Vielzahl von zeitlichen Druckverläufen generierbar. Diese Freiheitsgrade sind vor allem in der Gestaltung von Drehwerksantrieben im offenen Kreislauf sehr hilfreich.

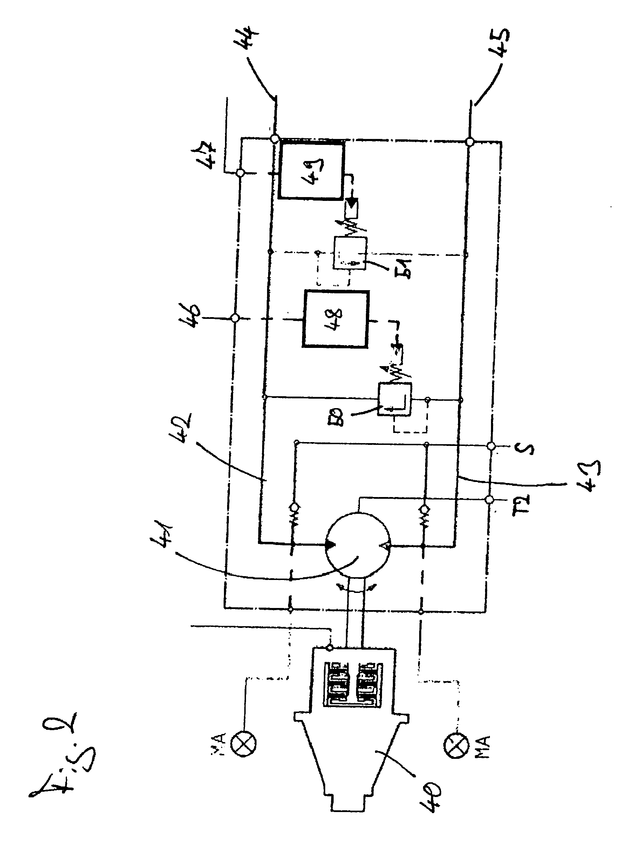

Figur 2 zeigt nun ein Ausführungsbeispiel eines Hydrauliksystems, in welchem erfindungsgemäße Druckbegrenzungsventile 50 und 51 zum Einsatz kommen. Das Hydrauliksystem weist dabei einen Hydraulikmotor 41 auf, dessen Ein- bzw. Ausgangsseiten mit den Hydraulikleitungen 42 und 43 in Verbindung stehen.

Im Ausführungsbeispiel handelt es sich bei dem Hydraulikmotor 41 dabei um einen Konstantmotor mit zwei Drehrichtungen. Der Motor wird dabei in einem offenen Kreislauf angesteuert. Dabei wird an den Lastdruckanschlüssen 44 und 45, welche über die Hydraulikleitungen 42 und 43 mit den beiden Seiten des Hydraulikmotors 41 in Verbindung stehen, je nach gewünschter Drehrichtung Hochdruck und Rücklaufdruck angelegt. Zur Ansteuerung wird dabei eine nicht gezeigte Ventileinheit eingesetzt. Der Hochdruck kann dabei über eine ebenfalls nicht gezeigte Hydraulikpumpe zur Verfügung gestellt werden.

Zwischen den beiden Hydraulikleitungen 42 und 43 sind die beiden Druckbegrenzungsventile 50 und 51 angeordnet, welche jeweils entgegengesetzte Durchlassrichtungen aufweisen. Je nachdem an, welchem der Lastdruckanschlüsse 44 oder 45 Hochdruck anliegt, begrenzt damit das Druckbegrenzungsventil 50 bzw. das Druckbegrenzungsventil 51 den Systemdruck, indem es bei Erreichen des Öffnungsdruckes Hydraulikfluid am Hydraulikmotor vorbei zur Gegenseite oder zum Tank ableitet.

Erfindungsgemäß, sind die beiden Druckbegrenzungsventile 50 und 51 dabei jeweils über Steueranschlüsse 46 bzw. 47 hydraulisch ansteuerbar, wobei die Steueranschlüsse 46 bzw. 47 über Drosselelementes 48 bzw. 49 mit den Elementen zur Einstellung des Öffnungsdruckes in Verbindung stehen. Vorteilhafterweise erfolgt die Ansteuerung der beiden Ventile dabei synchron, bsp. durch eine gemeinsame Steuerleitung.

Das erfindungsgemäße Hydrauliksystem weist weiterhin einen Anschluss S für eine Nachsaugfunktion auf, welcher über Rückschlagventile mit den Hydraulikleitungen 42 und 43 in Verbindung steht. Der Anschluss S erlaubt damit ein Nachsaugen von Hydraulikfluid in die Hydraulikleitung. Weiterhin sind ein Leckölanschluss T2 sowie Messstellen MA und MD für den Druck an den beiden Anschlüssen des Hydraulikmotors 41 vorgesehen.

Zum Beschleunigen des Hydraulikmotors 41 wird nun beispielsweise am Druckanschluss 49 Hochdruck angelegt, während am Druckanschluss 45 Rücklaufdruck angelegt wird. Das Druckbegrenzungsventil 51, welches den Systemdruck in der Hydraulikleitung 42 begrenzt, wird dabei auf seinen maximalen Öffnungsdruck eingestellt, um einen entsprechend hohen Systemdruck und damit ein entsprechend hohes Drehmoment zum Beschleunigen zur Verfügung stellen zu können.

In einer Neutralstellung werden die Druckanschlüsse 44 und/oder 45 dagegen geschlossen, so dass sich der Hydraulikmotor 41 gegen den Öldruck in den Druckleitungen 42 und 43 abstützen kann und damit gebremst wird. In der Neutralstellung wird dabei der Öffnungsdruck der Druckbegrenzungsventile 50 und 51 auf ihren Minimalwert angesteuert, so dass der Hydraulikmotor sich in dieser Neutralstellung nur auf einem geringen Druck in den Druckleitungen abstützt und daher nicht allzu stark abbremst.

In einem Bremsmodus wird dagegen der Öffnungsdruck der Druckbegrenzungsventile 50 und 51 wieder auf den Maximalwert angehoben, um so ein großes Bremsmoment für den Hydraulikmotor 41 zur Verfügung zu stellen.

Erfindungsgemäß kann dabei die Anordnung zur Ansteuerung des Hydraulikmotors 41 und insbesondere das Ventil, mit welchem der Druck an den Druckanschlüssen 44 und 45 gesteuert wird, mit dem Steuerelement zum Steuern des Steuerdrucks an den Druckanschlüssen 46 und 47 gekoppelt werden.

Insbesondere kann so beim Beschleunigen automatisch der Öffnungsdruck auf den Maximalwert eingestellt werden, in Neutralstellung der Öffnungsdruck auf den Minimalwert eingestellt werden und beim Bremsen der Hydraulikdruck wieder auf den Maximalwert erhöht werden.

Durch die erfindungsgemäße Dämpfung der Steuerung über die Drosselelemente 48 und 49 ergibt sich dabei sowohl beim Bremsen, als auch beim Beschleunigen eine feinfühlige und weiche Ansteuerung. Hierdurch können auch unerfahrene Bedienpersonen das erfindungsgemäße Hydrauliksystem problemlos bedienen. Dabei werden durch die gedämpfte Ansteuerung plötzliche Druckwechsel vermieden, was sowohl das Hydrauliksystem, als auch die durch den Hydraulikmotor bewegte Ausrüstung schont.

Als Steuerelement kann dabei insbesondere ein Joystick eingesetzt werden. Beim Beschleunigen stellt dieser automatisch ein hohes Druckniveau der Druckbegrenzungsventile ein. Wird der Joystick losgelassen, sinkt das Druckniveau, so dass mit einem geringen Bremsmoment gebremst wird. Wird der Joystick nun in die Gegenrichtung bewegt, wird das Druckniveau wieder erhöht, um stärker zu bremsen.

Eine entsprechende Ansteuerung kann dabei selbstverständlich auch bei einer Beschleunigung des Motors 41 in die Gegenrichtung erfolgen.

Weiterhin lassen sich die erfindungsgemäßen Druckbegrenzungsventile auch bei einer Ansteuerung des Hydraulikmotors in einem geschlossenen Kreislauf einsetzen. Hier würde der Hauptablauf der Druckbegrenzungsventile dann mit dem Tank, statt mit der anderen Seite des Hydraulikmotors verbunden werden.

Das erfindungsgemäße Hydrauliksystem kann dabei insbesondere zum Antrieb eines Drehwerks 40 eingesetzt werden. Beispielsweise kann es sich dabei um das Drehwerk eines Baggers oder Kranes handeln, durch welches ein Oberwagen gegenüber einem Unterwagen bewegbar ist.

Ebenso ergeben sich Einsatzmöglichkeiten für den Fahrantrieb eines verfahrbaren Arbeitsgerätes.

## Patentansprüche

1. Druckbegrenzungsventil mit einem Federelement (21), dessen Vorspannung den Öffnungsdruck des Druckbegrenzungsventils bestimmt und welches sich auf einem verschiebbaren Federkolben (22) abstützt, so dass die Vorspannung des Federelements (21) durch Verschieben des Federkolbens (22) einstellbar ist, wobei der Federkolben (22) durch Anlegen eines Steuerdruckes an einem Steueranschluss (33) bewegbar ist, welcher hydraulisch mit einer Kolbenkammer (23), deren Volumen von der Position des Federkolbens (22) abhängt, in Verbindung steht,
**dadurch gekennzeichnet,**
**dass** zwischen dem Steueranschluss (33) und der Kolbenkammer (23) ein Drosselelement (32) angeordnet ist.

2. Druckbegrenzungsventil nach Anspruch 1, wobei das Drosselelement (32) einstellbar ist.

3. Druckbegrenzungsventil mit einem Federelement, dessen Vorspannung den Öffnungsdruck des Druckbegrenzungsventils bestimmt und welches sich auf einem verschiebbaren Federkolben abstützt, so dass die Vorspannung des Federelements durch Verschieben des Federkolbens einstellbar ist,
**dadurch gekennzeichnet,**
**dass** der Federkolben über einen elektrischen Aktor bewegbar ist, welcher über einen elektrischen Steueranschluss ansteuerbar ist.

4. Druckbegrenzungsventil nach einem der vorangegangenen Ansprüche, wobei mindestens eine Endposition (25, 27) des Federkolbens (22) einstellbar ist, wobei vorteilhafterweise die Endposition dem maximalen oder dem minimalen durch Ansteuerung des Federkolbens (22) einstellbaren Öffnungsdruck entspricht.

5. Druckbegrenzungsventil nach Anspruch 4, wobei beide Endpositionen (25, 27) des Federkolbens (22) einstellbar sind.

6. Druckbegrenzungsventil nach einem der vorangegangenen Ansprüche, wobei es sich um ein vorgesteuertes Ventil handelt.

7. Druckbegrenzungsventil nach Anspruch 6 mit einem federbelasteten Hauptkolben (4), dessen Öffnungsbewegung durch Abfließen von Steuerfluid aus einer Hauptkolbenkammer (6) freigegeben wird, wobei das Federelement (21) einen Kegel (14) gegen einen Kegelsitz (15) drückt, durch welchen hindurch der Steuerfluidstrom zum Öffnen der Hauptstufe abfließt, wobei vorteilhafterweise die Hauptkolbenkammer (6) über ein Drosselelement (10) mit dem Kolbensitz (15) in Verbindung steht.

8. Druckbegrenzungsventil nach Anspruch 7, mit einem Hauptzulauf (1) und einem Hauptablauf (2), wobei der Hauptkolben (4) auf der der Hauptkolbenkammer (6) gegenüber liegenden Seite mit Druck aus dem Hauptzulauf beaufschlagt ist und durch eine Bewegung in die Kolbenkammer (6) hinein die Verbindung zwischen Hauptzulauf (1) und Hauptablauf (2) freigibt, wobei vorteilhafterweise der Hauptzulauf über ein im Hauptkolben (4) angeordnetes Drosselelement (9) mit der Kolbenkammer in Verbindung steht.

9. Hydrauliksystem mit wenigstens einem Druckbegrenzungsventil nach einem der vorangegangenen Ansprüche, wobei durch das Druckbegrenzungsventil ein maximaler Hydraulikdruck in einer Hydraulikleitung (42, 43) an einer Eingangs- oder einer Ausgangsseite eines Hydraulikmotors (41) über ein Steuerelement einstellbar ist, welches über eine hydraulische oder elektrische Steuerleitung mit dem Steueranschluss (33) in Verbindung steht, wobei es sich bei dem Hydrauliksystem vorteilhafterweise um einen offenen Hydraulikkreislauf handelt und/oder zwei Druckbegrenzungsventile (50, 51) vorgesehen sind, durch welche ein maximaler Hydraulikdruck in den Hydraulikleitungen (42, 43) an der Eingangs- und der Ausgangsseite des Hydraulikmotors (41) einstellbar ist.

10. Hydrauliksystem nach Anspruch 9, wobei das Steuerelement zur Ansteuerung der Beschleunigung des Hydraulikmotors (41) dient, wobei das Steuerelement in einem Beschleunigungsbereich das Druckbegrenzungsventil (50, 51) auf einen ersten Öffnungsdruck einstellt.

11. Hydrauliksystem nach Anspruch 9 oder 10, wobei das Steuerelement zur Ansteuerung des Bremsmomentes des Hydraulikmotors (41) dient und in einer Neutralstellung das Druckbegrenzungsventil auf einen zweiten Öffnungsdruck einstellt und/oder in einem Bremsbereich den Öffnungsdruck des Druckbegrenzungsventils erhöht.

12. Hydrauliksystem nach Ansprüchen 10 und 11, wobei das Steuerelement gleichzeitig ein Beschleunigungssteuerelement und das Druckbegrenzungsventil (50, 51) ansteuert, wobei vorteilhafterweise eine Bewegung des Steuerelements in eine erste Richtung den Hydraulikmotor (41) beschleunigt und das das Druckbegrenzungsventil auf einen ersten Öffnungsdruck einstellt, das Steuerelement in Neutralstellung den Fluidstrom zum Hydraulikmotor (41) stoppt und das Druckbegrenzungsventil auf einen zweiten, niedrigeren Öffnungsdruck einstellt, und bei einer Bewegung des Steuerelements in eine der ersten Richtung entgegengesetzte zweite Richtung den Öffnungsdruck des Druckbegrenzungsventils wieder erhöht.

13. Hydrauliksystem nach einem der Ansprüche 9 bis 12 zum Antrieb eines Drehwerks (40) oder eines Fahrwerks.

14. Verfahrbares Arbeitsgerät mit einem Hydrauliksystem nach einem der Ansprüche 9 bis 13, insbesondere zum Antrieb eines Fahrwerks zum Verfahren des Arbeitsgerätes und/oder zum Antrieb eines Drehwerks (40), durch welches ein Oberwagen gegenüber einem Unterwagen des Arbeitsgerätes bewegbar ist.

15. Verfahren zum Betrieb eines Hydrauliksystems nach einem der Ansprüche 9 bis 13, wobei das Bremsmoment des Hydraulikmotors (41) durch Ansteuerung des Druckbegrenzungsventils (50, 51) verändert wird.
